# EUROPEAN PATENT SPECIFICATION

(11) **EP 0 928 305 B1**
(45) Date of publication and mention of the grant of the patent: **28.06.2000**
(21) Application number: 97943059.2
(22) Date of filing: 26.09.1997
(51) Int. Cl.: C08G 61/00, C09K 11/06

(54) **HIGH EFFICIENCY LUMINESCENT COPOLYMERS**
LUMINESZENZFÄHIGE COPOLYMERE MIT HOHEM WIRKUNGSGRAD
COPOLYMERES HAUTEMENT EFFICACES

(30) Priority: 28.09.1996 GB 9620301; 30.10.1996 GB 9622625
(43) Date of publication of application: 14.07.1999
(73) Proprietor: Cambridge Display Technology Limited, Cambridge, CB3 OHJ (GB)
(72) Inventor: TOWNS, Carl, Stanstead, Essex CM24 8HB (GB); GRIZZI, Ilaria, London E17 7EA (GB)
(74) Representative: Daniels, Jeffrey Nicholas
(86) International application number: GB9702653
(87) International publication number: WO9813408

(56) References cited:
- EP-A- 0 637 621
- WO-A-93/14177

## Description

### Field of the Invention

The present invention relates to conjugated semiconductive copolymers exhibiting high photoluminescent efficiencies, and to methods for their preparation.

### Background of the Invention

Conjugated polymers such as poly (arylene vinylene) polymers have been used as organic electroluminescent (EL) materials in a variety of devices, as demonstrated in our earlier patent, US 5,399,502. Poly(p-phenylene vinylene) [PPV] is one such polymer, which can be prepared via the Wessling precursor method. (See "Precursor Route to Poly(p-phenylene Vinylene) : (Polymer Characterisation and Electronic Properties" D.D.C. Bradley, J. Phys. D 20, 1389 (1987)). Poly(p-phenylene vinylene) is the most basic example of a poly (arylene vinylene); in which the arylene constitutes a para-phenylene group. However, as explained in another of our earlier patents, US 5,401,827 (herein incorporated by reference), the term arylene includes within its scope all types of arylenes including heteroarylenes as well as arylenes incorporating more than one ring structure, including fused ring structures, and substituted ring structures, and not just phenylene.

The Wessling precursor method for preparing PPV involves the use of a tetrahydrothiophene based precursor with a halide counterion, for example, in the most basic case: 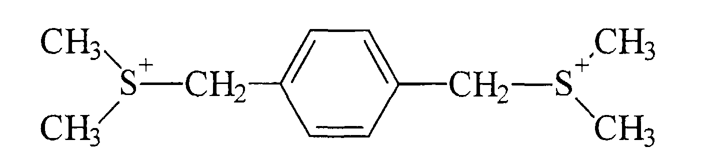 It has been proposed that the polymerisation of the p-xylenebis(sulphonium halide) monomer occurs via a quinoid intermediate as described by in "The Polymerisation of Xylylene Bisdialkyl Solfunium Salts" R.A. Wessling, J. Pol. Sci. Pol. Symp. 72, 55-66. (1985).

The PPV formed is insoluble and intractable and therefore a solution processable precursor is required. Device fabrication is carried out using the precursor material and the conjugated polymer is prepared in situ via a thermal conversion step. Typically, the precursor polymer is coated, by spin-coating or blade coating techniques, onto a transparent conductive oxide layer, for example Indium Tin Oxide (ITO). The ITO is itself coated onto a suitable substrate which may be glass or plastic. The precursor polymer film is then converted on the ITO by suitable heat treatment. Following this, appropriate metal electrodes are deposited. A multi-layer structure is therefore obtained which consists of an anode, the conjugated polymer, and the cathode. Injection of positive and negative charge carriers at the anode and cathode respectively and following exciton recombination leads to light emission.

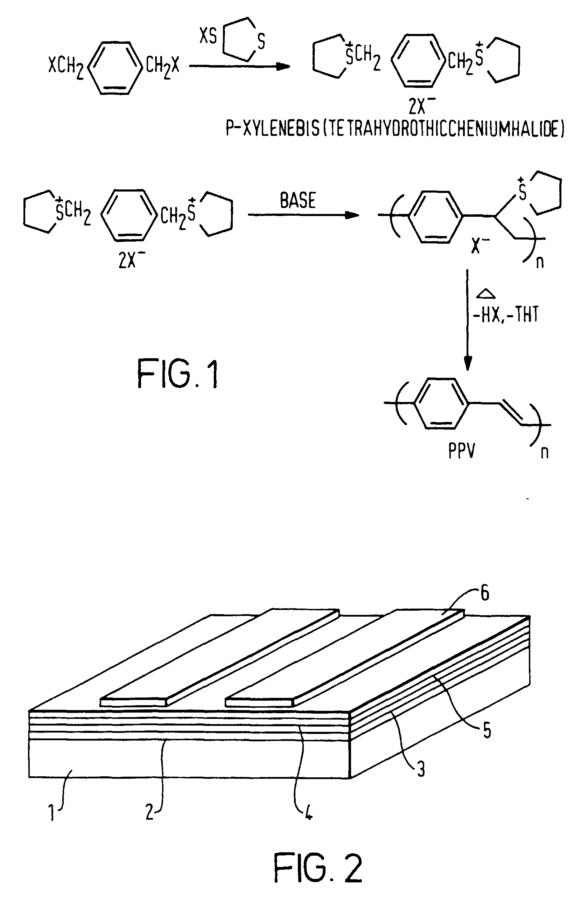

Other layers may be included into the device to facilitate charge injection/accumulation or to afford protection to the conductive oxide substrate during the conversion process. One standard device structure is illustrated in Figure 2.

The advantages of using a precursor conjugated polymers as active layers in EL devices include:
a) ease of fabrication;
b) amenability to multilayer structures;
c) intractability of converted polymer film; and
d) intrinsic luminescence properties.

However, there are some drawbacks to the use of this type of conjugated polymer. One disadvantage is that the quantum yield for radiative decay of the excited states appears to be lowered through their migration to non-radiative decay centres.

One method we have proposed previously to overcome this problem (see US 5,401,827) involves the use at least two chemically different repeat units with different semiconductor band gaps (for example, conjugated and non-conjugated segments) in a conjugated copolymer. The optical properties of the copolymer are determined by the relative proportions of the different repeat units.

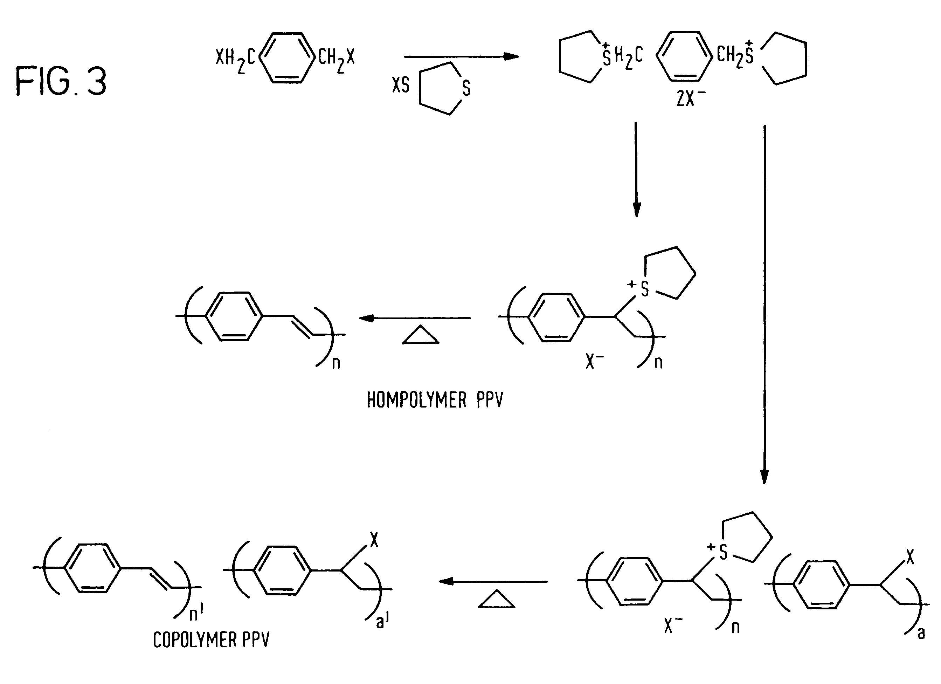

According to this method, copolymers are prepared either by copolymerising more than one bis(sulphonium) salt, effecting conversion of the precursor polymer, or by substituting the tetrahydrothiophene (THT)unit to provide groups that would survive the conversion process. The latter approach is illustrated in Figure 3.

Whilst such copolymers are an improvement on the polyarylene vinylene conjugated monomers of the previous generation, these copolymers also have their drawbacks. For example, conversion of precursor homopolymer or copolymer systems on certain conductive oxide substrates can lead to undesirable interactions between the conductive oxide coating and the polymer that lead either to quenching of luminescence and/or to modification of the expected copolymer composition. Furthermore, the presence of certain functional groups in the copolymer are detrimental to the performance of the device, and in particular to the lifetime of the device.

Accordingly, it is an aim of the present invention to provide new poly(arylene vinylene) based conjugated copolymer systems prepared via the precursor approach as emissive layers in EL devices which overcome these difficulties. Of particular interest are those precursor systems that are prepared via the 1,6 addition polymerisation of a quinoid intermediate.

### Summary of Invention

According to the present invention, there is provided a semiconductive conjugated copolymer, which is a random copolymer comprising monomer units of general formula:

(̵Ar-CH=CH)̵ₙ (̵Ar-CHNu-CH₂)̵ₘ (̵CR¹R²XCR³R⁴)̵_{y}

wherein
Ar is substituted or unsubstituted arylene;
Nu is a nucleophile;
X is a direct carbon to carbon single bond or the group -CR⁵=CR⁶-;
each of R¹, R², R³, R⁴, R⁵ and R⁶ is independently H, amine, halogen, CN, alkyl, alkoxy, alkyl carboxylate, carboxylic acid, alkyl ester, carbonyl, alkyl ether, alkyl thioether, alkyl amide, substituted or unsubstituted aryl, aryloxy, aryl carboxylate, aryl ether, aryl ester, aryl thioether, aryl amide, aryl ketone, or heterocyclic in which one of R¹, R², R³ or R⁴ is optionally CQ=CH₂, where Q is halogen, methyl, nitrile or H;
n and y are integers; and
m is an integer or zero.

The combination of p-phenylene vinylene monomer units with the substituted unsaturated co-monomer units to form a conjugated semiconductive copolymer exhibiting high photoluminescence has not hitherto been contemplated.

The term carbonyl refers to all alkyl or aryl based carbonyl groups such as alkyl and aryl ketones, aldehydes and carbonyl halides.

Preferably, at least one of R¹,R²,R³ and R⁴ is not H.

Preferably, at least one of R¹,R²,R³ and R⁴ is amine, nitrile, alkyl or aryl carboxylate, alkyl, aryl, carboxylic acid, carboxylic acid ester, amide, heterocyclic or amine.

More preferably the alkyl based substituents have no more than 10 carbon atoms, the aryl based substituents have 5 to 20 carbon atoms and the substituents including both alkyl and aryl units have 6 to 30 carbon atoms.

In one embodiment of this invention the monomer unit used to form the polymeric unit (CR¹R²XCR³R⁴)_{y} is
CH₂=CHR⁴ (i.e. R¹=R²=R³=H and X is a direct single bond).

Examples of this monomer include styrene, alkyl(meth)acrylates, acrylonitrile, vinyl acetate, N-vinyl carbazole, and vinyl anthracene.

In a further embodiment of this invention the monomer unit used to form the polymeric unit (CR¹R²XCR³R⁴)_{y} is
ACH=CHB (i.e. R¹=R³=H and X is a direct carbon to carbon single bond).

Examples of this monomer include fumaronitrile, dialkyl maleates and stilbene. A and B may represent the same cyclic group such as in the cases of acenaphthylene, N-alkyl or N-aryl maleimides, and maleic anhydride:

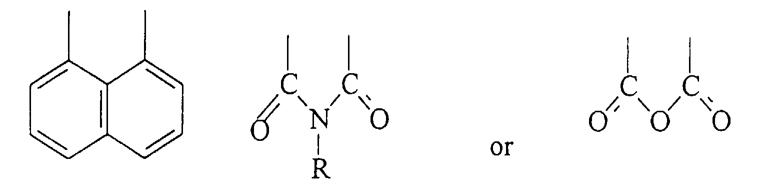

In a further embodiment of this invention the monomer unit used to form the polymeric units (CR¹R²XCR³R⁴)_{y} is CH₂=CAB (i.e. R¹=R²=H and X is a direct carbon to carbon single bond).

Examples of this monomer would include vinylidene chloride, methyl styrene, alkyl (alk)acrylate (such as methyl methacrylate) etc. The groups A and B (i.e. R³ and R⁴) may be the same or different.

In a further embodiment of this invention the monomer unit used to form the polymeric unit (CR¹R²XCR³R⁴) is

CH₂=CH-CY=CH₂ or CH₂=CY-CH=CH₂

(i.e. R¹=R²=R³=R⁴=H,and X = -CR⁵=CR⁶-)

Examples of this monomer include butadiene, isoprene, chloroprene, etc. Wherein at least one of R⁵ and R⁶ is selected from halide, alkyl or aryl. Where this monomer unit is isoprene (H₂C=CMe-CH=CH₂), R⁵=Me and R⁶=H.

m may be zero. However, it is possible to form a "hybrid" copolymer wherein the copolymeric component (Ar-CHNu-CH₂) is included in the copolymer by the method explained in more detail below.

According to the present invention there is also provided a process for the preparation of a semiconductive conjugated copolymer, which comprises copolymerising a first comonomer of general formula L₁CH₂-Ar-CH₂L₂, in which Ar is substituted or unsubstituted arylene and L₁ and L₂ are independently leaving groups, with a second comonomer of general formula CR¹R²=CR³R⁴ or CR¹R²=CR⁵-CR⁶=CR³R⁴, in which R¹, R²,R³, R⁴,R⁵ and R⁶ are as defined in any one of the preceding claims.

The synthesis involves polymerising the bis(sulphonium halide) monomer in the presence of the unsaturated comonomer systems via a free-radical or ionic addition polymerisation. When the copolymerisation is complete the precursor solution is neutralised with excess acid. Such acids include aliphatic carboxylic acids, such as formic acid or acetic acid, or unsubstituted and substituted aromatic carboxylic acids such as 2,6 dimethylbenzoic acid, and derivatives thereof. In addition, inorganic acids may be used such as HCl or HBr. The precursor solution is then purified by dialysis and when converted yields highly photoluminescent conjugated polymer as compared to the polymers of the prior art.

Preferably each of L₁ and L₂ is a sulphonium leaving group.

According to one embodiment of the invention, copolymers may be prepared that utilise a hybrid approach in that an addition-type copolymerisation or terpolymerisation is carried out and the proportion of non-conjugated segments in the copolymer is increased further by nucleophilic displacement of some of the remaining leaving groups. The resultant semiconductive conjugated copolymer is of the general formula detailed above, in which m is not zero.

The concentration of non-conjugated segments may be increased to such a level that the emission spectrum is significantly blue shifted. In the extreme, blue emission is observed.

According to one preferred embodiment of this invention, copolymers may be prepared such that cross-linkable groups may be introduced into the polyalkylene vinylene copolymer. This may, for example, involve the terpolymerisation of vinyl anthracene and N-vinyl maleimide that would cross-link during conversion via a Diels-Alder reaction.

According to another preferred embodiment of this invention, a chromophore and/or a lumophore may be incorporated into the polyalkylene vinylene by nucleophilic displacement of the sulphonium group to yield a semiconductive copolymer containing lower band gap chromophores as compared to the polyalkylene vinylene. Exciton migration to the lower band gap component leads to efficient emission from the chromophore with the corresponding shift in emission spectrum. Hence, this method may be used to tune the emission of the polyalkylene vinylene.

The present invention also provides a multilayer electroluminescent device incorporating the semiconductive conjugated copolymer described above as the emitting layer and an underlying electrode on which the conversion of the precursor copolymer system has been carried out. At least one other layer constituting the second electrode is present. The emissive copolymer exhibits enhanced photoluminescent efficiency in the presence or absence of ITO, enhanced EL efficiency and differential stability during device driving.

### Brief Description of the Drawings

Figure 1 schematically illustrates the precursor approach to PPV which occurs through a quinoid intermediate according to the prior art;
Figure 2 is a perspective view of a typical structure for a electroluminescent device; and
Figure 3 schematically illustrates the synthesis of semiconductive PPV homopolymers and copolymers according to the prior art.

### Description of the Preferred Embodiments

The present invention will now be described in greater details with reference to the following examples. The results of each of the examples are tabulated in Table 1.

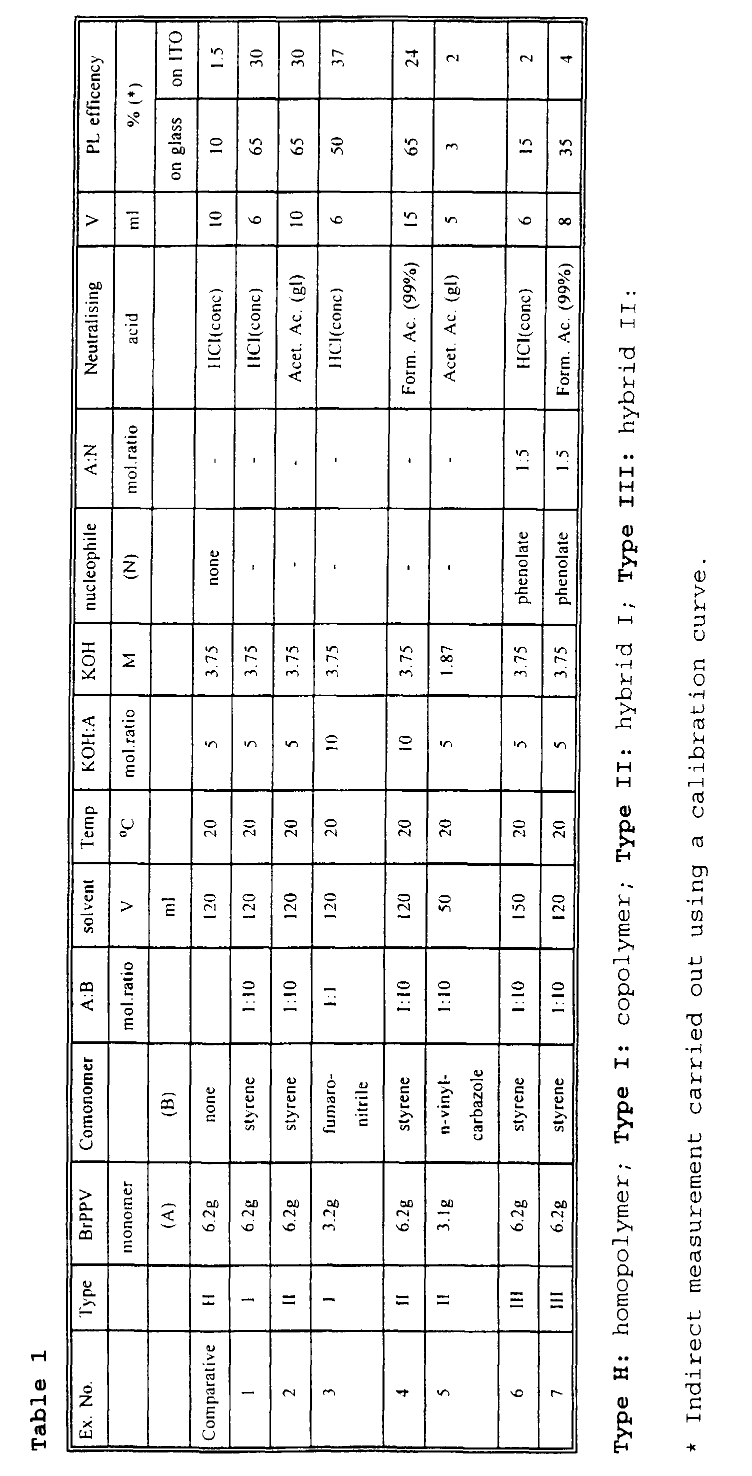

### Example 1 (copolymer production)

At a scale of 6.2g, one equivalent of p-xylenebis(tetrahydrothiophenium bromide) salt was taken with 10 equivalents of styrene and dissolved in 120ml 50/50 water/methanol solvent mixture. The solution was then deoxygenated for at least 20 mins with a nitrogen purge. Following this, a deoxygenated solution of 5 equivalents of potassium hydroxide in 20ml of 50/50 water/methanol was added to the monomer solution. When polymerisation was complete, neutralisation was carried out with 6ml concentrated hydrochloric acid.

The product was then dialysed against 50/50 water/methanol until the dialate conductivity was <1 µS/cm. The final dialysis was then carried out against neat methanol. The product is useable in the fabrication of EL devices of any conventional structure.

### Example 2 (hybrid I of copolymer with nucleophilic substitution)

At a scale of 6.2g, one mole equivalent of p-xylenebis(tetrahydrothiophenium bromide) salt was taken with 10 equivalents of styrene and dissolved in 120ml 50/50 water/methanol solvent mixture. The solution was then deoxygenated for at least 20mins with a nitrogen purge. Following this, a deoxygenated solution of 5 equivalents of potassium hydroxide in 20ml 50/50 water methanol was added to the monomer solution. When the polymerisation was complete, neutralisation was carried out with 10 ml acetic acid. The product was then dialysed against 50/50 water/methanol until the dialate conductivity was <1 µS/cm. Two final dialyses were carried out against neat methanol. This product is usable in the fabrication of an EL device as described below in Example 8.

As it will be appreciated by those skilled in the art, the proportion of styrene functionality used in Example 1 may be modified by carrying out the synthesis as above but using different proportions of styrene in the monomer feed, using different types of emulsion or different solvents.

### Example 3 (hybrid I of copolymer with nucleophilic substitution)

At a scale of 3.2g, one equivalent of p-xylenebis(tetrahydrothiophenium bromide) salt was taken with 1 equivalent of fumaronitrile and dissolved in 120ml 50/50 water/methanol solvent mixture. The solution was then deoxygenated for at least 20mins with a nitrogen purge. Following this, a deoxygenated solution of 10 equivalents of potassium hydroxide in 20ml 50/50 water methanol was added to the monomer solution. When the polymerisation was complete, neutralisation was carried out with 10ml acetic acid. The product was then dialysed against 50/50 water/methanol until the dialate conductivity was <1 µS/cm. The final dialysis was then carried out against neat methanol. This product is useable in the fabrication of an EL device.

As it will be appreciated by those skilled in the art of the invention, the proportion of fumaronitrile functionality may be modified by carrying out the synthesis as above but using different proportions of fumaronitrile in the monomer feed.

### Example 4 (hybrid I of copolymer with nucleophilic substitution)

At a scale of 6.2g, one equivalent of p-xylenebis(tetrahydrothiophenium bromide) (please confirm that this is the PPV used) salt was taken with 10 equivalents of styrene and dissolved in 120ml 50/50 water/methanol solvent mixture. The solution was then deoxygenated for at least 20 mins with a nitrogen purge. Following this, a deoxygenated solution of 10 equivalents of potassium hydroxide in 40ml of 50/50 water/methanol was added to the monomer solution. When polymerisation was complete, neutralisation was carried out with 15ml formic acid (99 %).

The product was then dialysed against 50/50 water/methanol until the dialate conductivity was <1 µS/cm. The final dialysis was then carried out against neat methanol. The photoluminescent efficiency (in %) was evaluated on both glass and indium tin oxide and is recorded in Table 1. The product is useable in the fabrication of EL devices of any conventional structure.

### Example 5 (hybrid I of copolymer with nucleophilic substitution)

At a scale of 3.1g, one equivalent of p-xylenebis(tetrahydrothiophenium bromide) was dissolved in 50ml methanol and deoxygenated for 15 minutes. To this solution was added one mole equivalent of N-vinyl carbazole in 30ml dimethyl formamide, together with 5 mole equivalents of potassium hydroxide in 20ml 1/3 water/dimethyl formamide solvent mixture. The solution thus formed was deoxygenated for at least 15 minutes with a nitrogen purge. When polymerisation was complete, neutralisation was carried out with 5ml acetic acid. The product was then dialysed four times against 3/1 methanol/dimethyl formamide. A final dialysis was carried out against neat dimethyl formamide. This product is usable in the fabrication of an EL device as described in Example 8.

### Example 6 (hybrid II of copolymer with double nucleophilic substitution)

At a scale of 6.2g, one mole equivalent of p-xylenebis(tetrahydrothiophenium bromide) salt was taken with 10 equivalents of styrene and dissolved in 150ml 26/74 water/methanol solvent mixture. The solution was then deoxygenated for at least 20 minutes with a nitrogen purge. Following this, a deoxygenated solution of 5 equivalents of potassium hydroxide in 20ml 50/50 water/methanol was added to a monomer solution, together with 5 mole equivalents phenol in 50ml methanol. When the polymerisation was complete, neutralisation was carried out with 6ml hydrochloric acid. The product was then dialysed against 50/50 water/methanol until the dialate conductivity was <2 µS/cm. Two final dialyses were carried out against neat methanol. This product is useful in the fabrication of an EL device as described in Example 8.

### Example 7 (hybrid II of copolymer with double nucleophilic substitution)

Example 6 was repeated except that neutralisation following polymerisation was carried out with 8ml formic acid instead of the hydrochloric acid. The product was then dialysed against 50/50 water/methanol until the dialate conductivity was <1 µS/cm. Two final dialyses were carried out each against neat methanol. This produce is useable in the fabrication of an EL device as described in Example 8.

### Example 8 (device manufacture)

Referring to Figure 2, device manufacture is carried out by coating by spin-coating the substituted precursor copolymer at a thickness of 100nm after conversion onto a semi-transparent indium tin oxide layer 2 on a glass substrate 1. The precursor copolymer film 3 is then converted at 150°C for 4 hours. Following this, a calcium electrode 6 is deposited by thermal evaporation and, following the application of a suitable voltage (5V), light emission is observed. Additional polymer layers 3 and 5 may be applied during manufacture of the device to act as charge transport layers.

### Comparative Example (homopolymer production)

6.2g of p-xylenebis(tetrahydrothiophenium bromide) (please confirm that this is the PPV used) salt was dissolved in 120ml 50/50 water/methanol solvent mixture. The solution was deoxygenated for at least 20 minutes with a nitrogen purge. Following this, a deoxygenated solution of 5 equivalents of potassium hydroxide in 20ml 50/50 water/methanol was added to the monomer solution. When polymerisation was complete, neutralisation was carried out with 10ml concentrated HCl.

The product was then dialysed against 50/50 water/methanol until the dialate conductivity was <1 µS/cm. A final dialysis was carried out against neat methanol. The photoluminescent efficiency of this homopolymer was evaluated on glass and indium tin oxide, and the results tabulated in Table 1.

## Claims

1. A semiconductive conjugated copolymer, which is a random copolymer comprising monomer units of general formula:
(̵Ar-CH=CH)̵ₙ (̵Ar-CHNu-CH₂)̵ₘ (̵CR¹R²XCR³R⁴)̵_{y}
wherein
Ar is substituted or unsubstituted arylene;
Nu is a nucleophile;
X is a direct carbon to carbon single bond or the group -CR⁵=CR⁶-;
each of R¹, R², R³, R⁴, R⁵ and R⁶ is independently H, amine, halogen, CN, alkyl, alkoxy, alkyl carboxylate, carboxylic acid, alkyl ester, carbonyl, alkyl ether, alkyl thioether, alkyl amide, substituted or unsubstituted aryl, aryloxy, aryl carboxylate, aryl ether, aryl ester, aryl thioether, aryl amide, aryl ketone, or heterocyclic in which one of R¹, R², R³ or R⁴ is optionally CQ=CH₂, where Q is halogen, methyl, nitrile or H;
n and y are integers; and
m is an integer or zero.

2. A copolymer according to claim 1, wherein at least one of R¹,R², R³ and R⁴ is not H

3. A copolymer according to claim 1, wherein at least one of R¹,R²,R³ and R⁴ is amine, nitrile, alkyl or aryl carboxylate, alkyl, aryl, carboxylic acid, carboxylic acid ester, amide, heterocyclic, or amine.

4. A copolymer according to claim 3, wherein the alkyl based substituents have no more than 10 carbon atoms, the aryl based substituents have 5 to 20 carbon atoms and the substituents including both alkyl and aryl units have 6 to 30 carbon atoms.

5. A copolymer according to any one of claims 1 to 4, wherein x is a direct carbon to carbon single bond.

6. A copolymer according to claim 5, wherein R¹=R²=R³=H.

7. A copolymer according to claim 6, wherein R⁴ is Ph, CN, OOCCH₃, N-carbazole, or anthracene.

8. A copolymer according to claim 5, wherein R¹=R³=H.

9. A copolymer according to claim 8, wherein R²=CN and R⁴=COOH, R²=R⁴=COO-alkyl, R²=R⁴=Ph, or R² and R⁴ form a ring system which is 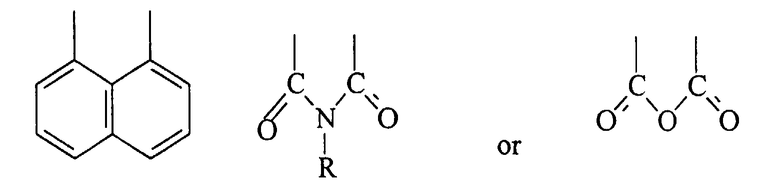 in which R is alkyl or aryl.

10. A copolymer according to claim 5, wherein R¹=R²=H.

11. A copolymer according to claim 10, wherein R³=R⁴=Cl, R³=Me and R⁴=Ph, or R³=Alkyl and R⁴=COO-Alkyl.

12. A copolymer according to any one of claims 1 to 3, wherein X is the group -CR⁵=CR⁶-.

13. A copolymer according to claim 12 wherein R¹=R²=R³=R⁴=H.

14. A copolymer according to claim 12 or claim 13 wherein at least one of R⁵ and R⁶ is selected from halide, alkyl or aryl.

15. A copolymer according to claim 12 or claim 13 wherein R⁵ and R⁶ are both H.

16. A copolymer according to any one of the preceding claims wherein m is zero.

17. A process for the preparation of a semiconductive conjugated copolymer, which comprises copolymerising a first comonomer of general formula L₁CH₂-Ar-CH₂L₂, in which Ar is substituted or unsubstituted arylene and L₁ and L₂ are independently leaving groups, with a second comonomer of general formula CR¹R²=CR³R⁴ or CR¹R²=CR³-CR⁶=CR³R⁴, in which R¹,R², R³, R⁴, R⁵ and R⁶ are as defined in any one of the preceding claims.

18. A process according to claim 16, wherein each L₁ and L₂ is a sulphonium leaving group.

19. A process according to claim 17 or claim 18, wherein the copolymerisation is effected in base, and is subsequently neutralised with an acid.

20. A process according to any one of claims 17 to 19, wherein a cross-linking group is incorporated into the copolymer.

21. A process according to any one of claims 17 to 20, wherein a chromophore and/or a lumophore is incorporated by nucleophilic displacement of the leaving group.

22. A process according to any one of claims 17 to 20, wherein a chromophore and/or a lumophore is incorporated into the copolymer by direct polymerisation of the unsaturated chromophore and/or lumophore.

23. A semiconductive conjugated copolymer obtainable by a process according to any one of claims 17 to 22.

24. A luminescent device, comprising a substrate and a copolymer according to any one of claims 1 to 11 or 23, supported on the substrate.

25. An electroluminescent device, comprising a first electrode, a second electrode and at least one layer comprising an emissive layer disposed between the electrodes, which at least one layer comprises a copolymer according to any one of claims 1 to 11 or 23.

## Patentansprüche

1. Ein halbleitendes konjugiertes Copolymer, das ein statistisches Monomer ist, das Monomereinheiten der folgenden allgemeinen Formel enthält:
(̵Ar-CH=CH)̵ₙ (̵Ar-CHNu-CH₂)̵ₘ (̵CR¹R²XCR³R⁴)̵_{y},
wobei
Ar substituiertes oder unsubstituiertes Arylen ist;
Nu ein Nucleophil ist;
X eine direkte Kohlenstoff-Kohlenstoff-Einfachbindung oder die Gruppe -CR⁵=CR⁶- ist;
R¹, R², R³, R⁴, R⁵ und R⁶ unabhängig jeweils H, Amin, Halogen, CN, Alkyl, Alkoxy, Alkylcarboxylat, Carbonsäure, Alkylester, Carbonyl, Alkylether, Alkylthioether, Alkylamid, substituiertes oder nichtsubstituiertes Aryl, Aryloxy, Arylcarboxylat, Arylether, Arylester, Arylthioether, Arylamid, Arylketon oder heterocyclisch sind, wobei eines von R¹, R², R³ oder R⁴ wahlweise CQ=CH₂ ist, wobei Q Halogen, Methyl, Nitril oder H ist;
n und y ganze Zahlen sind; und
m eine ganze Zahl oder Null ist.

2. Copolymer gemäß Anspruch 1, wobei zumindest eines von R¹, R², R³ und R⁴ nicht H ist.

3. Copolymer gemäß Anspruch 1, wobei zumindest eines von R¹, R², R³ und R⁴ Amin, Nitril, Alkyl- oder Arylcarboxylat, Alkyl, Aryl, Carbonsäure, Carbonsäureester, Amid, heterocyclisch oder Amin ist.

4. Copolymer gemäß Anspruch 3, wobei die Substituenten auf Alkylbasis höchstens 10 Kohlenstoffatome aufweisen, die Substituenten auf Arylbasis 5 bis 20 Kohlenstoffatome haben und die Substituenten, die Alkyl- und Aryleinheiten beinhalten, 6 bis 30 Kohlenstoffatome haben.

5. Copolymer gemäß einem der Ansprüche 1 bis 4, wobei x eine direkte Kohlenstoff-Kohlenstoff-Einfachbindung ist.

6. Copolymer gemäß Anspruch 5, wobei R¹=R²=R³=H.

7. Copolymer gemäß Anspruch 6, wobei R⁴ Ph, CN, OOCCH₃, N-Carbazol oder Anthracen ist.

8. Copolymer gemäß Anspruch 5, wobei R¹=R³=H.

9. Copolymer gemäß Anspruch 8, wobei R²=CN und R⁴=COOH, R²=R⁴=COO-Alkyl, R²=R⁴=Ph, oder R² und R⁴ bilden ein Ringsystem, das entweder 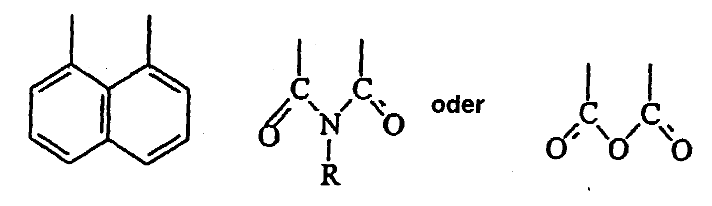 ist, wobei R Alkyl oder Aryl ist.

10. Copolymer gemäß Anspruch 5, wobei R¹=R²=H.

11. Copolymer gemäß Anspruch 10, wobei R³=R⁴=Cl, R³=Me und R⁴=Ph oder R³=Alkyl und R⁴=COO-Alkyl.

12. Copolymer gemäß einem der Ansprüche 1 bis 3, wobei X die Gruppe -CR⁵=CR⁶- ist.

13. Copolymer gemäß Anspruch 12, wobei R¹=R²=R³=R⁴=H.

14. Copolymer gemäß Anspruch 12 oder Anspruch 13, wobei zumindest eines von R⁵ und R⁶ aus Halogenid, Alkyl oder Aryl ausgewählt ist.

15. Copolymer gemäß Anspruch 12 oder Anspruch 13, wobei R⁵ und R⁶ beide H sind.

16. Copolymer gemäß einem der vorhergehenden Ansprüche, wobei m Null ist.

17. Ein Verfahren zur Herstellung eines halbleitenden konjugierten Copolymers, das die Copolymerisation eines ersten Comonomers der allgemeinen Formel L₁CH₂-Ar-CH₂L₂, wobei Ar substituiertes oder nichtsubstituiertes Arylen ist und L₁ und L₂ unabhängig Austrittsgruppen sind, mit einem zweiten Comonomer der allgemeinen Formel CR¹R²=CR³R⁴ oder CR¹R²=CR³-CR⁶=CR³R⁴ umfaßt, wobei R¹, R², R³, R⁴, R⁵ und R⁶ wie in einem der vorhergehenden Ansprüche definiert sind.

18. Verfahren gemäß Anspruch 16, wobei jedes L₁ und L₂ eine Sulfoniumaustrittsgruppe ist.

19. Verfahren gemäß Anspruch 17 oder Anspruch 18, wobei die Copolymerisation in einer Base erfolgt und danach mit einer Säure neutralisiert wird.

20. Verfahren gemäß einem der Ansprüche 17 bis 19, wobei eine Vernetzungsgruppe in das Copolymer eingebaut ist.

21. Verfahren gemäß einem der Ansprüche 17 bis 20, wobei ein Chromophor und/oder ein Lumophor durch nucleophile Substitution der Austrittsgruppe eingebaut ist.

22. Verfahren gemäß einem der Ansprüche 17 bis 20, wobei ein Chromophor und/oder ein Lumophor durch direkte Polymerisation des ungesättigten Chromophors und/oder Lumophors in das Copolymer eingebaut ist.

23. Ein halbleitendes konjugiertes Copolymer, das durch ein Verfahren gemäß einem der Ansprüche 17 bis 22 erhalten wird.

24. Eine Lumineszenzvorrichtung, bestehend aus einem Substrat und einem Copolymer gemäß einem der Ansprüche 1 bis 11 oder 23, das von dem Substrat getragen wird.

25. Eine Elektrolumineszenzvorrichtung, bestehend aus einer ersten Elektrode, einer zweiten Elektrode und zumindest einer Schicht, die eine Emissionsschicht zwischen den Elektroden umfaßt, wobei die zumindest eine Schicht ein Copolymer gemäß einem der Ansprüche 1 bis 11 oder 23 umfaßt.

## Revendications

1. Un copolymère conjugué semi-conducteur, lequel est un copolymère statistique comprenant des motifs monomères de formule générale :
(̵Ar-CH=CH)̵ₙ (̵Ar-CHNu-CH₂)̵ₘ (̵CR¹R²XCR³R⁴)̵_{y}
dans lequel
Ar est de l'arylène substitué ou non substitué ;
Nu est un nucléophile ;
X est une liaison simple carbone-carbone directe ou le groupe -CR⁵=CR⁶- ;
chacun d'entre R¹, R², R³, R⁴, R⁵ et R⁶ est indépendamment de l'H, de l'amine, de l'halogène, du CN, de l'alkyle, de l'alkoxy, du carboxylate d'alkyle, de l'acide carboxylique, de l'ester d'alkyle, du carbonyle, de l'éther d'alkyle, du thioéther d'alkyle, de l'amide d'alkyle, de l'aryle substitué ou non substitué, de l'aryloxy, du carboxylate d'aryle, de l'éther d'aryle, de l'ester d'aryle, du thioéther d'aryle, de l'amide d'aryle, du cétone d'aryle, ou hétérocyclique dans lequel l'un d'entre R¹, R², R³ ou R⁴ est de façon optionnelle CQ=CH₂, où Q est de l'halogène, du méthyle, du nitrile ou de l'H ;
n et y sont des entiers ; et
m est un entier ou zéro.

2. Un copolymère selon la revendication 1, dans lequel au moins l'un d'entre R¹, R², R³ et R⁴ n'est pas de l'H.

3. Un copolymère selon la revendication 1, dans lequel au moins l'un d'entre R¹, R², R³ et R⁴ est de l'amine, du nitrile, du carboxylate d'alkyle ou d'aryle, de l'alkyle, de l'aryle, de l'acide carboxylique, de l'ester d'acide carboxylique, de l'amide, hétérocyclique, ou de l'amine.

4. Un copolymère selon la revendication 3, dans lequel les substituants à base d'alkyle ne possèdent pas plus de 10 atomes de carbone, les substituants à base d'aryle possèdent 5 à 20 atomes de carbone et les substituants comportant à la fois des motifs alkyle et aryle possèdent 6 à 30 atomes de carbone.

5. Un copolymère selon une quelconque des revendications 1 à 4, dans lequel x est une liaison simple carbone-carbone directe.

6. Un copolymère selon la revendication 5, dans lequel R¹=R²=R³=H.

7. Un copolymère selon la revendication 6, dans lequel R⁴ est du Ph, du CN, du OOCCH₃, du N-carbazole, ou de l'anthracène.

8. Un copolymère selon la revendication 5, dans lequel R¹=R³=H.

9. Un copolymère selon la revendication 8, dans lequel R²=CN et R⁴=COOH, R²=R⁴=COO-alkyle, R²=R⁴=Ph, ou R² et R⁴ forment un système cyclique qui est 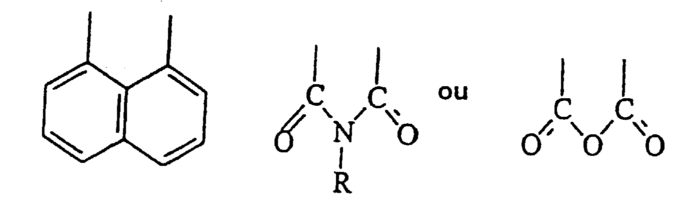 dans lequel R est de l'alkyle ou de l'aryle.

10. Un copolymère selon la revendication 5, dans lequel R¹=R²=H.

11. Un copolymère selon la revendication 10, dans lequel R³=R⁴=Cl, R³=Me et R⁴=Ph, ou R³=Alkyle et R⁴=COO-Alkyle.

12. Un copolymère selon une quelconque des revendications 1 à 3, dans lequel X est le groupe -CR⁵=CR⁶-.

13. Un copolymère selon la revendication 12 dans lequel R¹=R²=R³=R⁴=H.

14. Un copolymère selon la revendication 12 ou la revendication 13 dans lequel au moins l'un d'entre R⁵ et R⁶ est sélectionné parmi l'halogénure, l'alkyle ou l'aryle.

15. Un copolymère selon la revendication 12 ou la revendication 13 dans lequel R⁵ et R⁶ sont tous deux de l'H.

16. Un copolymère selon une quelconque des revendications précédentes dans lequel m est zéro.

17. Un procédé pour la préparation d'un copolymère conjugué semi-conducteur, lequel comprend la copolymérisation d'un premier comonomère de formule générale L₁CH₂-Ar-CH₂L₂, dans lequel Ar est de l'arylène substitué ou non substitué et L₁ et L₂ sont indépendamment des groupes partants, avec un second comonomère de formule générale CR¹R²=CR³R⁴ ou CR¹R²=CR³-CR⁶=CR³R⁴, dans lequel R¹, R², R³, R⁴, R⁵ et R⁶ sont tels que les définit une quelconque des revendications précédentes.

18. Un procédé selon la revendication 16, dans lequel chaque L₁ et L₂ est un groupe partant sulfonium.

19. Un procédé selon la revendication 17 ou la revendication 18, dans lequel la copolymérisation est effectuée en base, et est neutralisée par la suite avec un acide.

20. Un procédé selon une quelconque des revendications 17 à 19, dans lequel un groupe de réticulation est incorporé dans le copolymère.

21. Un procédé selon une quelconque des revendications 17 à 20, dans lequel un chromophore et/ou un lumophore est incorporé par déplacement nucléophile du groupe partant.

22. Un procédé selon une quelconque des revendications 17 à 20, dans lequel un chromophore et/ou un lumophore est incorporé dans le copolymère par polymérisation directe du chromophore et/ou lumophore insaturé.

23. Un copolymère conjugué semi-conducteur que l'on peut obtenir par un procédé selon une quelconque des revendications 17 à 22.

24. Un dispositif luminescent, comprenant un substrat et un copolymère selon une quelconque des revendications 1 à 11 ou 23, avec le substrat comme support.

25. Un dispositif électroluminescent, comprenant une première électrode, une seconde électrode et une couche au moins comprenant une couche émissive disposée entre les électrodes, laquelle couche au moins comprend un copolymère selon une quelconque des revendications 1 à 11 ou 23.
